# EUROPEAN PATENT APPLICATION

(11) **EP 2 562 615 A2**
(43) Date of publication of application: **27.02.2013**
(21) Application number: 12180453.8
(22) Date of filing: 14.08.2012
(51) Int. Cl.: G06F 1/16

(54) **Display apparatus**

(30) Priority: 28.09.2011 KR 20110098023; 26.08.2011 US 201161527907 P
(71) Applicant: Samsung Electronics Co., Ltd., Suwon-si, Gyeonggi-do, 443-742 (KR)
(72) Inventor: Park, Kyu-eun, Gyeonggi-do (KR); Kim, Kyoung-hoon, Gyeonggi-do (KR); Kim, Ji-gwang, Seoul (KR); Oh, Si-myoung, Gyeonggi-do (KR)
(74) Representative: Jacobs, Bart

(57) **Abstract**

A display apparatus includes a base (100); a stand (200) which extends from the base; and a display body (300) which comprises a cover frame (310)detachably mounted on one end portion of the stand, a display unit (340)accommodated in the cover frame and configured to display images, and a plurality of speakers (361, 362, 363, 364) installed on the cover frame and configured to output sounds corresponding to a plurality of audio channels. A first speaker (361) of the plurality of speakers is disposed at a central position of a lower side of the cover frame facing the base among four sides of the cover frame and perpendicular to an image display side of the display unit, projecting toward the base.

## Description

Apparatuses consistent with the exemplary embodiments relate to a display apparatus which displays images and outputs sounds based on image signals, and more particularly, to a display apparatus which has a structure of improving clarity of output sounds.

A display apparatus processes image signals received from an external source or generated by itself and displays images on a display panel provided therein. A display apparatus may be generally configured as a computer monitor, a television (TV), or the like. Image signals including general image content may include image data as well as audio data corresponding to the image data. Accordingly, the display apparatus extracts image data and audio data from received image signals and processes the data, and outputs sounds based on the audio data to a speaker.

Such audio data/audio signals correspond to a plurality of channels so that a user three-dimensionally perceives sounds output from a speaker, and the display apparatus outputs the audio signals of the plurality of channels through a plurality of speakers installed corresponding to the respective channels.

When the display apparatus is configured as a TV to display broadcasts, broadcast images are generally associated with people. That is, sounds output from a speaker of the display apparatus are largely human voices, and thus it is preferable to install a speaker so that a user clearly perceives human voices. However, as a speaker becomes smaller-sized with a trend toward thin, light, and design-focused display apparatuses, sound quality or sound pressure of the speaker may deteriorate or deterioration of sound quality may worsen according to installed positions of the speaker in the display apparatus.

According to an aspect of an exemplary embodiment, there is provided a display apparatus including: a base; a stand which is extends from the base; and a display body which includes a cover frame detachably mounted on one end portion of the stand to be supported by the stand, a display unit accommodated in the cover frame and configured to display images, and a plurality of speakers installed on the cover frame and configured to output sounds corresponding to a plurality of audio channels, wherein the plurality of speakers includes a first speaker of the speakers is disposed at a central position of a lower side of the cover frame facing the base among four sides on four edges of the cover frame and perpendicular to an image display side of the display unit, the first speaker projecting toward the base.

The first speaker may include a speaker which is configured to output mid-pitched to high-pitched sounds corresponding to a frequency range of a human voice.

The first speaker may be disposed so as not to obstruct installation of the cover frame on a substantially vertical installation surface when the cover frame is disposed on the substantially vertical installation surface detachably from the stand.

The central position of the lower side in which the first speaker is disposed may be an area in which the stand is positioned on a lower edge of the cover frame when the cover frame is mounted on the stand.

The first speaker and the cover frame may be integrally formed as a unitary structure.

The first speaker may be detachably mounted on the cover frame.

The first speaker may be coupled with the cover frame by at least one screw.

The first speaker and the cover frame may be coupled with each other by engagement of hooks.

The plurality of speakers may further include a woofer corresponding to a low frequency range of sounds, and at least one tweeter corresponding to a high frequency range of sounds, and the first speaker is a center speaker corresponding to a mid to high audio frequency range of sounds.

The woofer may be installed in a rear side of the cover frame.

The at least one tweeter may be installed on at least one of left and right edges among the four edges of the cover frame.

The above and/or other aspects will become apparent and more readily appreciated from the following description of the exemplary embodiments, taken in conjunction with the accompanying drawings, in which:
FIG. 1 is a perspective view of a display apparatus according to an exemplary embodiment;
FIG. 2 is a perspective view illustrating that a display body of the display apparatus of FIG. 1 is installed on a wall according to an exemplary embodiment;
FIG. 3 is a block diagram illustrating a configuration of the display body of the display apparatus of FIG. 1 according to an exemplary embodiment;
FIG. 4 is a concept view illustrating an illustrative arrangement of channels in a sound image with respect to an audio signal processed in the display apparatus of FIG. 1 according to an exemplary embodiment;
FIG. 5 is a front view illustrating position of each speaker installed in the display apparatus of FIG. 1 according to an exemplary embodiment;
FIG. 6 is a perspective view of a main part of illustrating an illustrative structure in which a first speaker is combined with the display body in the display apparatus of FIG. 1 according to an exemplary embodiment; and
FIG. 7 is a perspective view of a main part of illustrating another illustrative structure in which a first speaker is combined with the display body in the display apparatus of FIG. 1 according to an exemplary embodiment.

Exemplary embodiments will be described in detail below with reference to accompanying drawings. The inventive concept may be embodied in various forms without being limited to the exemplary embodiments set forth herein. Descriptions of well-known parts are omitted for clarity and conciseness, and like reference numerals refer to like elements throughout.

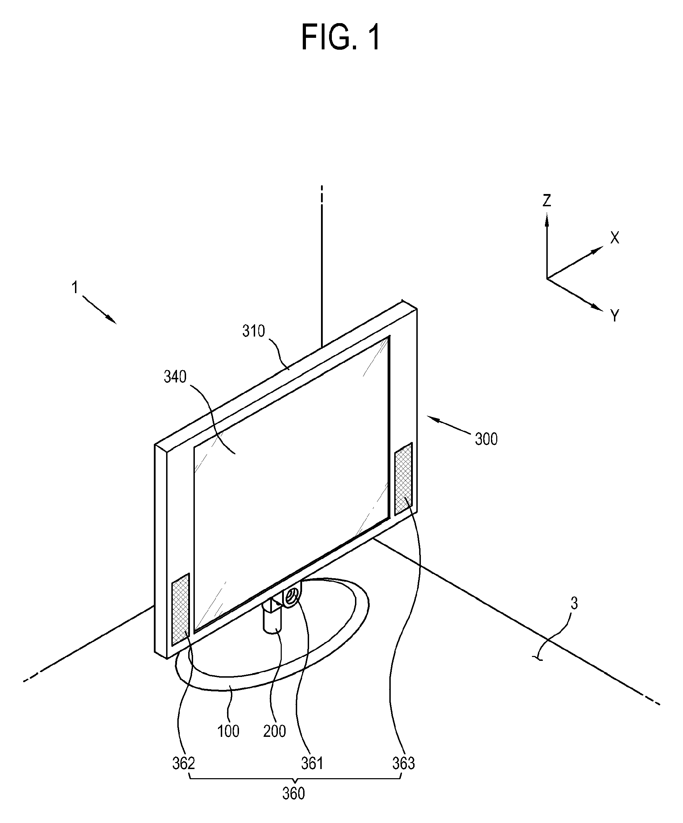

FIG. 1 is a perspective view of a display apparatus according to an exemplary embodiment.

As shown in FIG. 1, the display apparatus 1 according to the present embodiment includes a base 100 disposed on an installation surface 3, a stand 200 extending upright from the base 100, and a display body 300 supported by the stand 200 and displaying images based on image signals.

In the drawings, X, Y, and Z directions are perpendicular to one another, wherein the X direction is a width direction of the display body 300, the Y direction is a direction in which images on a display unit 340 of the display body 300 are viewed by a user, and the Z direction is a height direction of the display body 300. An image display side of the display unit 340 on which images are displayed is parallel with an X-Z plane.

Here, opposite X, Y, and Z directions are expressed as -X, -Y, and -Z directions, respectively, and an X-Z plane means a plane defined by an X-axis and a Z-axis. The drawings and embodiments will be described on the basis of the foregoing definition of the directions.

The base 100 is configured as a plate which may have various shapes, such as a polygon, a circle or an oval, and having a predetermined thickness. The base 100 is seated on the installation surface 3 substantially parallel with an X-Y plane, for example, on the ground or a top surface of a desk or table substantially perpendicular to the gravity direction. The base 100 may have various shapes and sizes in consideration of the size and weight of the display body 300 so that the display body 300 is stably supported upright to the installation surface 3.

The stand 200 extends from the base 100 in the Z direction. Here, the stand 200 may extend in a direction parallel with the Z-axis or a direction inclined at a predetermined angle with respect to the Z-axis. One end of the stand 200 is coupled to the base 100, and the other end the stand 200 is coupled to the display body 300. Alternatively, the stand 200 and the base 100 may be integrally formed as a unitary structure.

The stand 200 may be coupled to the base 100 and the display body 300 via various means. For example, the stand 200 may be coupled to the base 100 and the display body 300 using one or more screws (not shown), one or more rivets (not shown) and the like, or hook structures may be disposed between the stand 200 and the base 100 or between the stand 200 and the display body 300 to engage with each other.

The display body 300 is coupled to the stand 200, thereby being supported upright on the installation surface 3 by the base 100 and the stand 200. The display body 300 displays images and outputs sounds based on image signals received from an external source.

The display body 300 includes a cover frame 310 forming an outward shape of the display body 300 and may be coupled with and supported by the stand 200, the display unit 340 accommodated in an aperture of a front side of the cover frame 310 and configured to display images, and a speaker 360 installed on and/or in the cover frame 310 and configured to output sounds.

The cover frame 310 accommodates components of the display body 300. Defining a plane surface of the cover frame 310 facing in the Y direction as a front side and a plane surface thereof facing in the -Y direction as a rear side, the cover frame 310 is formed with an opening on the front side to expose the image display side of the display unit 340 and formed with a coupling structure on the rear side to be coupled to the stand 200. The coupling structure will be described in detail below.

The speaker 360 includes a plurality of speakers 361, 362 and 363 configured to output sounds corresponding to a plurality of audio channels, respectively. Here, the respective speakers 361, 362 and 363 are installed on or in the cover frame 310 separately from each other in view of user's stereoscopic recognition properties with respect to each audio channel. Here, the audio channels and the speaker 360 will be described in detail below.

With this configuration, for example when a broadcast signal is received to the display body 300, the display body 300 extracts an image signal and an audio signal from the broadcast signal and displays an image corresponding to the image signal with outputting a sound corresponding to the audio signal.

As described above, the display body 300 according to the present exemplary embodiment is coupled to the stand 200, thereby being supported upright on the installation surface 3. However, the display body 300 may be installed on an installation surface standing substantially upright to the insulation surface 3, for example, on a wall, rather than the installation surface 3.

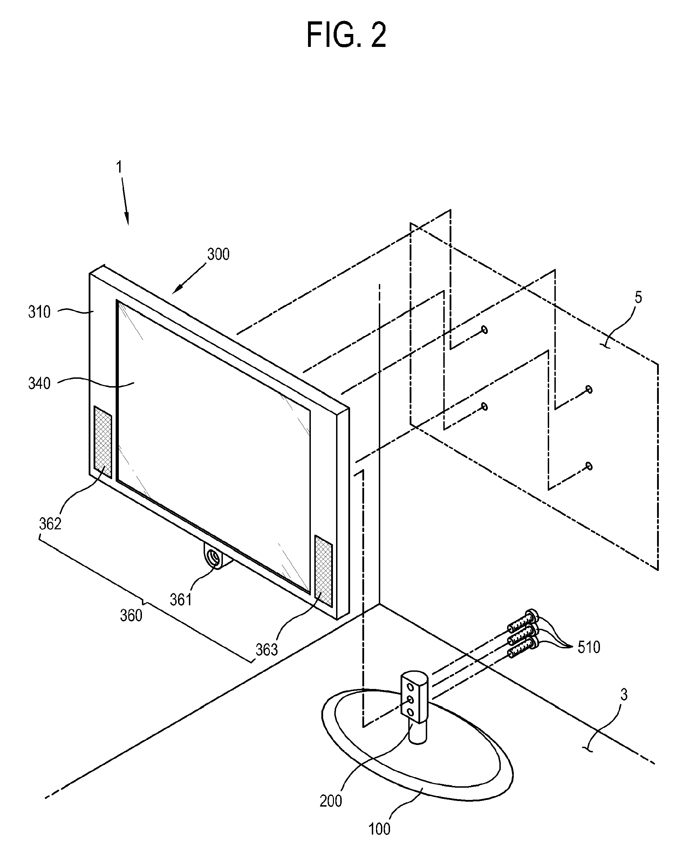

FIG. 2 is a perspective view illustrating that the display body 300 is installed on a vertical installation surface 5 according to an exemplary embodiment.

As shown in FIG. 2, the display body 300 is detachably coupled to the stand 200. Here, the display body 300 and the stand 200 may be coupled by various structures, for example, may be coupled to each other by one or more screws 510.

In an initial state, the display body 300 is coupled to the stand 200 to be supported on the installation surface 3. In this initial state, to install the display body 300 on the vertical installation surface 5, such as a wall, a user removes the screws 510 from the display body 300 and the stand 200, thereby detaching the display body 300 from the stand 200.

The detached display body 300 may now be installed on the vertical installation surface 5. Here, an installation frame (not shown) to install the display body 300 in is provided on the vertical installation surface 5, and the display body 300 is coupled to the installation frame using one or more screws (not shown), so that the display body 300 may be installed on the vertical installation surface 5. This installation style is merely an illustrative example, and the display body 300 may be installed on the installation surface 5 by various installation structures.

Since the respective speakers 361, 362 and 363 are provided in the cover frame 310, as the display body 30 is placed on the installation surface 5, the speakers 361, 362 and 363 are also disposed on the installation surface 5 together with the display unit 340.

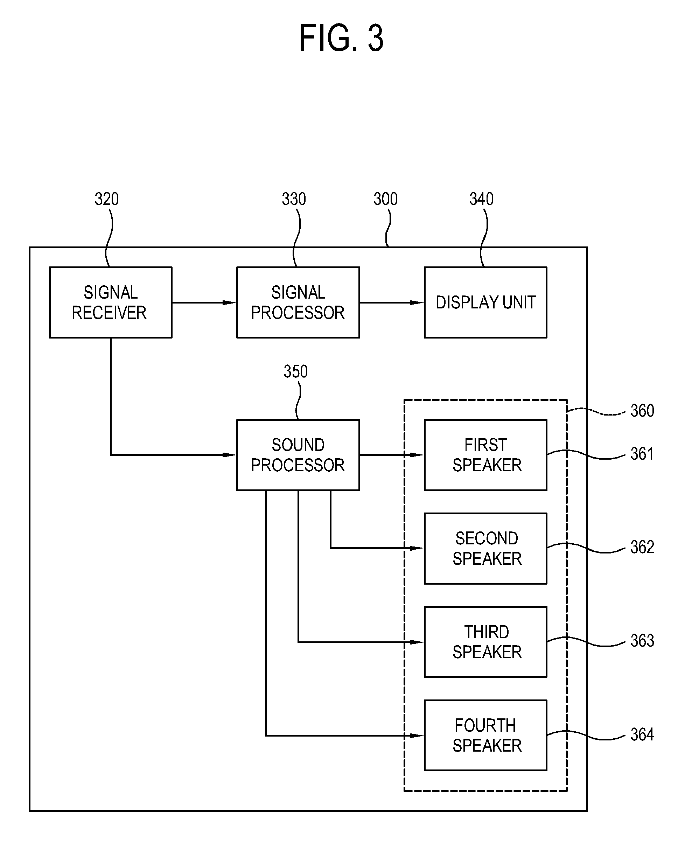

Hereinafter, a configuration of the display body 300 according to an exemplary embodiment is described in detail with reference to FIG. 3.

As shown in FIG. 3, the display body 300 according to the present exemplary embodiment includes a signal receiver 320 configured to receive signals from an external source, an image processor 330 configured to process image data included in signals received by the signal receiver 320, a display unit 340 configured to display images based on image signals processed by the image processor 330, a sound processor 350 configured to process audio data included in signals received by the signal receiver 320, and a speaker 360 configured to output sounds based on audio signals processed by the sound processor 350.

Here, the signal receiver 320, the image processor 330 and the sound processor 350 may be implemented on an image processing board (not shown) embedded in the cover frame 310.

The signal receiver 320 receives signals including image signals and audio signals from various sources (not shown), such as a broadcast signal, or receives at least one of image signals and audio signals. The signal receiver 320 may receive radio frequency (RF) signals transmitted from a broadcasting station wirelessly, or receive signals in composite video, component video, super video, Syndicat des Constructeurs d'Appareils Radiorécepteurs et Téléviseurs (SCART), and high definition multimedia interface (HDMI) standards through on or more wires. Alternatively, the signal receiver 320 may be connected to a server (not shown) to receive data packets of image data.

When the signal receiver 320 receives a broadcast signal, the signal receiver 320 tunes the received broadcast signal into an image signal and an audio signal and transmits the image signal and the audio signal to the image processor 330 and to the sound processor 350, respectively.

The image processor 330 performs various types of preset image processing on image signals received from the signal receiver 320. The image processor 330 outputs processed image signals to the display unit 340 so that images are displayed on the image display side of the display unit 340.

The image processor 330 may perform various types of image processing, without being particularly limited, for example, decoding corresponding to various image formats, de-interlacing, frame refresh rate conversion, scaling, noise reduction to improve image quality, detail enhancement, and the like.

The display unit 340 displays images based on image signals output from the image processor 330. The display unit 340 may be implemented as various types of display panels using liquid crystals, plasma, light emitting diodes, organic light emitting diodes, a surface conduction electron emitter, a carbon nano-tube, nano-crystals, or the like, without being limited thereto.

When the display unit 340 includes a liquid crystal display (LCD) panel (not shown), the display unit 340 may further include a backlight unit (not shown) providing light to the LCD panel. Various configurations of the backlight unit are suggested and designed currently, and descriptions thereof are omitted herein.

The sound processor 350 processes audio signals/sound signals received from the signal receiver 320 and outputs the signals to the speaker 360. The sound processor 350 processes audio signals of a plurality of channels to correspond to a plurality of speakers 361, 362, 363 and 364 provided by the respective channels and outputs the signals to the corresponding speakers 361, 362, 363 and 364.

For example, if audio signals of 3.1 channels are received when the speakers 361, 362, 363 and 364 are provided correspondingly to the 3.1 channels, the sound processor 350 processes the audio signals correspondingly to the respective channels and outputs the audio signals to the respective speakers 361, 362, 363 and 364 by the respective channels. If audio signals of 5.1 channels are received when the speakers 361, 362, 363 and 364 are provided correspondingly to 3.1 channels, the audio signals of the 5.1 channels are reconstituted correspondingly to the 3.1 channels and output to the respective channels 361, 362, 363 and 364.

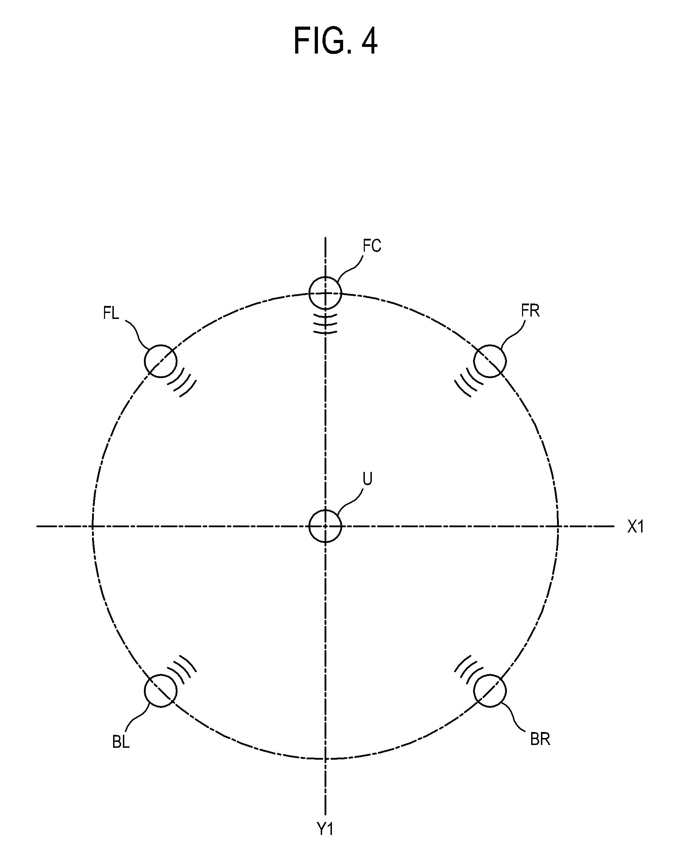

Hereinafter, audio channels of audio signals processed by the sound processor 350 are described with reference to FIG. 4. FIG. 4 is a concept view illustrating an arrangement of channels in a sound image with respect to audio signals of 5.1 channels. In the present exemplary embodiment, a sound image of audio signals corresponding to 5.1 channels is described, but the number of channels of audio signals processed by the sound processor 350 is not particularly limited.

As shown in FIG. 4, a user U is located in a center of the sound image where an X1-axis in a right-and-left direction is perpendicular to a Y1-axis in a front-and-back direction. In the case of the audio signals of the 5.1 channels, the signals of the respective channels include a front left channel FL, a front right channel FR, a front center channel FC, a back/surround left channel BL, a back/surround right channel BR based on the user U and a woofer channel (not shown) corresponding to low audio frequencies.

Generally, the number of speakers is provided corresponding to the number of channels. For example, a 5.1 channel speaker unit includes six speakers including a woofer channel in total, and a 3.1 channel speaker unit includes four speakers in total.

The woofer channel has a relatively low directivity with respect to output of sounds due to characteristics of its audio frequency band. That is, since a woofer corresponding to the woofer channel does not have a remarkable effect on a sound image perceived by the user hearing a sound according to installed positions thereof, the woofer may be installed at relatively random positions.

The FL, FR, BL and BR channels include a tweeter channel corresponding to high audio frequencies. Unlike the woofer channel, the tweeter channel has a relatively high directivity with respect to output of sounds. That is, since a tweeter corresponding to the tweeter channel has a remarkable effect on a sound image according to installed positions thereof, the tweeter may be installed at a position determined in consideration of a position of the user.

The FC channel corresponds to mid and high audio frequencies and has a high directivity with respect to output of sounds like the tweeter channel. Particularly, the FC channel corresponds to a frequency range of a human voice and acts as the most important parameter in view of clarity of a sound in a sound image.

That is, in order that the user U clearly perceives a sound, as shown in FIG. 4, a sound corresponding to the FC channel may need to be disposed approximately directly in front of the user U in a sound image. Accordingly, if a speaker is installed corresponding to the FC channel in the display apparatus 1, the speaker corresponding to the FC channel is disposed in front of the user U facing an image displayed of the display apparatus 1 so that a sound is output toward the user U. The speaker corresponding to the FC channel is referred to as a center speaker.

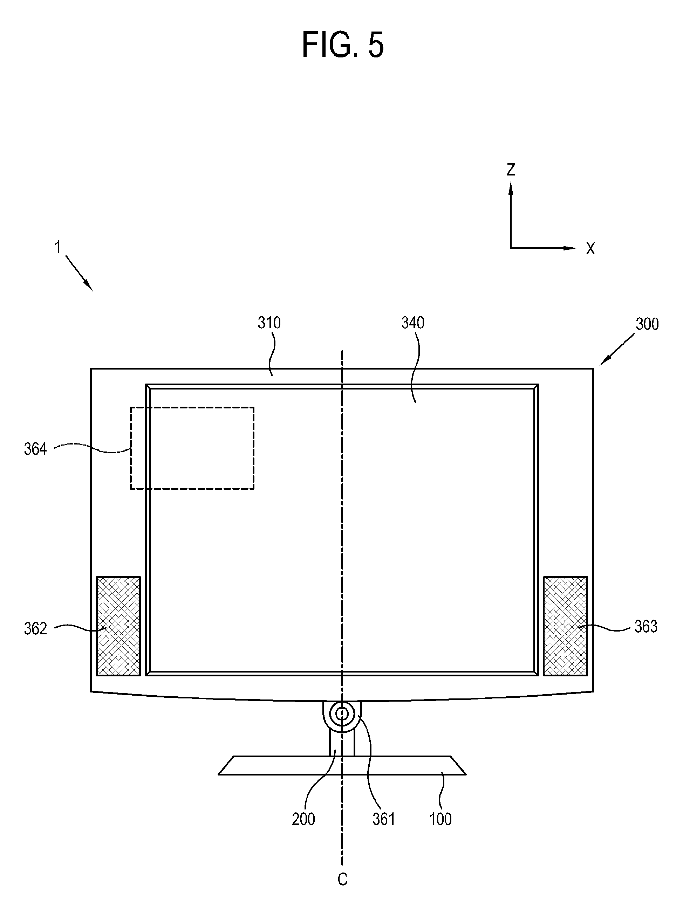

According to the present exemplary embodiment reflecting this concept, positions in which speakers 361, 362, 363 and 364 are installed in the display apparatus 1 will be described with reference to FIG. 5. FIG. 5 is a front view illustrating the positions of the respective speakers 361, 362, 363 and 364 installed in the display apparatus 1 according to an exemplary embodiment.

FIG. 5 illustrates a case where the speakers 361, 362, 363 and 364 are provided corresponding to 3.1 channels, but such case is an illustrative example only. This concept may be applied to the display apparatus 1 provided corresponding to various channels, such as 5.1 channels, 6.1 channels, and the like.

As shown in FIG. 5, assuming that a user faces an image displayed on the display unit 340, the cover frame 310 supports edge portions in all four directions, that is, Z, - Z, -X and X directions, based on the image display side of the display unit 340 on which images are displayed toward the user.

Further, the cover frame 310 includes four sides extending on the respective edge portions in the Z, -Z, -X and X directions from a front side of the display body 300 to a rear side thereof perpendicularly to the image display side of the display unit 340, that is, perpendicular to the X-Z plane. For example, among the four sides of the cover frame 310, a lower side is a surface perpendicular to the image display side of the display unit 340 and facing the base 100.

In the present exemplary embodiment, the speakers 361, 362, 363 and 364 installed in the display body 300 correspond to 3.1 channels. In this case, the speakers 361, 362, 363 and 364 includes a first speaker 361 including a center speaker corresponding to a mid to high audio frequency range of sounds, a second speaker 362 and a third speaker 363 each including a tweeter corresponding to a high frequency range of sounds, and a fourth speaker 364 including a woofer corresponding to a low frequency range of sounds.

The second speaker 362 and the third speaker 363 may be configured to output sounds corresponding to other frequency bands in addition to the tweeter.

As described above with reference to FIG. 4, the center speaker may be installed in a central position in front of the user in order to secure clarity of human voices. Thus, the first speaker 361 is installed in a central position (C) of the lower side of the cover frame 310 in the -Z direction, projecting toward the base 100. If the display body 300 is installed on a wall separately from the stand 200, as shown in FIG. 2, the first speaker 361 is installed in a position of the lower side of the cover frame 310 so as not to obstruct installation of the cover frame 310 on the wall.

Here, when the cover frame 310 is mounted on the stand 200, the central position (C) is an area in which the stand 200 is positioned on the lower edge of the cover frame 310. That is, when the user faces images frontally, the first speaker 361 is disposed projecting to cover at least part of a front side of the stand 200. Accordingly, the first speaker 361 may output sounds in a central position of the display body 300, that is, facing the user frontally.

The second speaker 362 and the third speaker 363 are installed on left and right front edges of the four front edges of the cover frame 310, that is, edges in -X and X directions, respectively, such that sounds are output frontward. The second speaker 362 and the third speaker 363 correspond to left and right channels of sounds, respectively, and thus are disposed to be vertically symmetrical based on the first speaker 361 to form a sound image (see FIG. 4) so that the user perceives sounds three-dimensionally.

The fourth speaker 364, including the woofer, is installed in a back or rear side of the display body 300, thereby saving an installation space in the front side of the display body 300.

According to the present exemplary embodiment, when the display body 300 is supported as illustrated in both FIG. 1 and FIG. 2, output sounds may be provided to secure clarity of sounds perceived by the user.

In the present exemplary embodiment, the first speaker 361 and the cover frame 310 may be integrally formed as a unitary structure. Alternatively, the first speaker 361 may be configured as an independent component which is detachable from the cover frame 310.

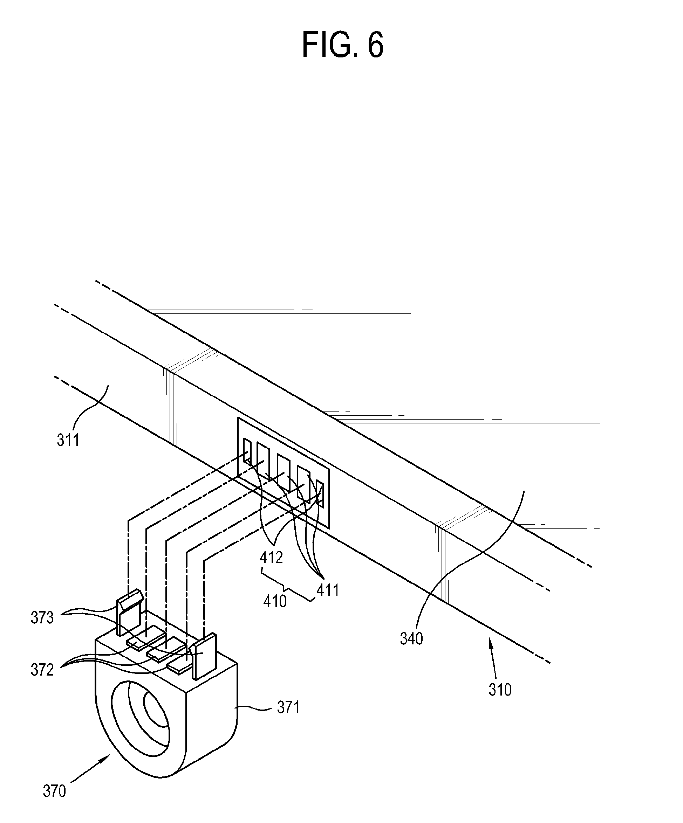

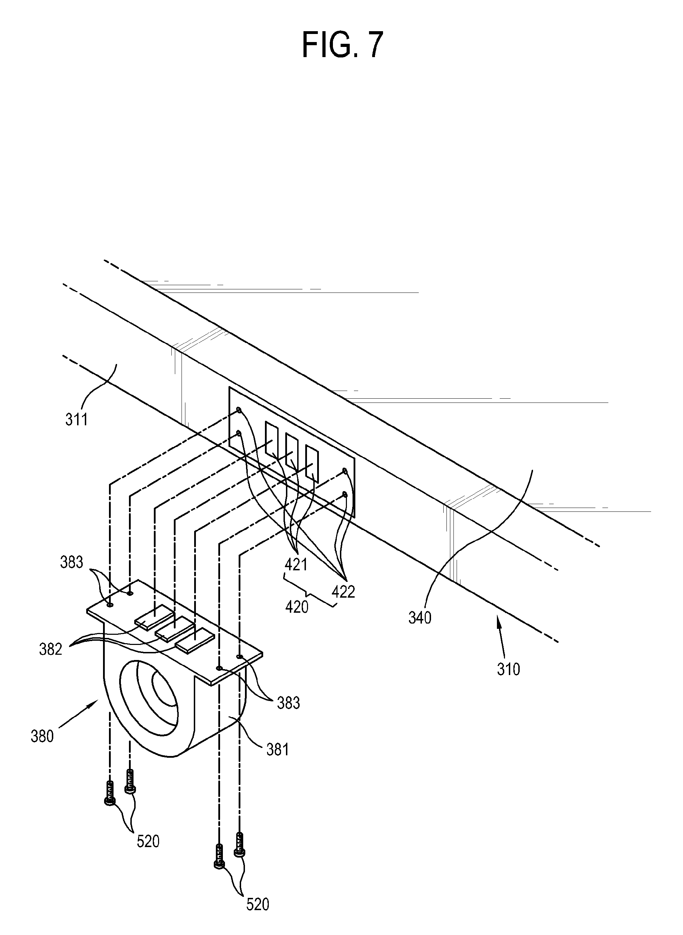

Hereinafter, when the first speaker 361 is a separate component from the cover frame 310, a structure in which the first speaker 361 is combined with the cover frame 310 is described with reference to FIGs. 6 and 7.

FIG. 6 is a perspective view of a main part illustrating an illustrative combined structure of a first speaker 370 and the cover frame 310 according to an exemplary embodiment.

As shown in FIG. 6, according to the present exemplary embodiment, a speaker combining part 410, which the first speaker 370 is combined with, is installed on the lower side 311 of the cover frame 310 perpendicular to the image display side of the display unit 340.

The first speaker 370 includes a speaker body 371, a speaker terminal 372 formed on an external upper side of the speaker body 371 and electrically coupled with the speaker body 371, and at least one hook 373 projecting from the external upper side of the speaker body 371.

The speaker combining part 410 includes a body terminal 411 electrically coupled to the sound processor 350 (see FIG. 3) and at least one hook accommodation part 412 configured to accommodate the at least one hook 373 of the first speaker 370.

With this configuration, a user mounts the first speaker 370 on the speaker combining part 410 such that the at least one hook 373 is accommodated in the at least one hook accommodation part 412. As the at least one hook 373 is inserted in the at least one hook accommodation part 412, the first speaker 370 is combined with and supported by the cover frame 310.

Here, the speaker terminal 372 and the body terminal 411 come in contact with each other, so that the sound processor 350 and the speaker body 371 are electrically coupled to each other. The speaker body 371 receives audio signals processed by the sound processor 350 and is provided with power for driving from the display body 300. Accordingly, the speaker body 371 outputs sounds corresponding to received audio signals.

FIG. 7 is a perspective view of a main part illustrating another illustrative combined structure of a first speaker 380 and the cover frame 310 according to an exemplary embodiment.

As shown in FIG. 7, according to the present exemplary embodiment, a speaker combining part 420, which the first speaker 380 is combined with, is installed on the lower side 311 of the cover frame 310 perpendicular to the image display side of the display unit 340.

The first speaker 380 includes a speaker body 381, a speaker terminal 382 installed on an external upper side of the speaker body 381 and electrically coupled with the speaker body 381, and at least one speaker coupling hole 383 formed on the external upper side of the speaker body 381.

The speaker combining part 420 includes a body terminal 421 electrically connected to the sound processor 350 (see FIG. 3) and at least one body coupling hole 422 formed corresponding to the at least one speaker coupling hole 383 of the first speaker 380.

With this configuration, a user mounts couples the at least one speaker coupling hole 383 and the at least one body coupling hole 422 using at least one screw 520, and accordingly the first speaker 380 is combined with and supported by the cover frame 310.

Here, the speaker terminal 382 and the body terminal 421 come in contact with each other, so that the sound processor 350 and the speaker body 381 are electrically coupled to each other. The speaker body 381 receives audio signals processed by the sound processor 350 and is provided with power for driving from the display body 300. Accordingly, the speaker body 381 outputs sounds corresponding to received audio signals.

According to the structures described above, the present exemplary embodiments may combine the first speakers 370 and 380 with the cover frame 310.

Although a few exemplary embodiments have been shown and described, it will be appreciated by those skilled in the art that changes may be made in these exemplary embodiments without departing from the scope of the present invention which is defined in the appended claims and their equivalents.

## Claims

1. A display apparatus comprising:
a base;
a stand which extends from the base; and
a display body which comprises a cover frame detachably mounted on one end portion of the stand, a display unit accommodated in the cover frame and configured to display images, and a plurality of speakers installed on the cover frame and configured to output sounds corresponding to a plurality of audio channels,
wherein the plurality of speakers comprises a first speaker disposed at a central position of a lower side of the cover frame facing the base among four sides of the cover frame and perpendicular to an image display side of the display unit, the first speaker projecting toward the base.

2. The display apparatus according to claim 1, wherein the first speaker comprises a speaker which is configured to output mid-pitched to high-pitched sounds corresponding to a frequency range of a human voice.

3. The display apparatus according to claim 1 or 2, wherein the first speaker is disposed so as not to obstruct installation of the cover frame on a substantially vertical installation surface when the cover frame is disposed on the substantially vertical installation surface detachably from the stand.

4. The display apparatus according to claim 3, wherein the central position of the lower side in which the first speaker is disposed is an area in which the stand is positioned on a lower edge of the cover frame when the cover frame is mounted on the stand.

5. The display apparatus according to anyone of claims 1 to 4, wherein the first speaker and the cover frame are integrally formed as a unitary structure.

6. The display apparatus according to anyone of claims 1 to 4, wherein the first speaker is detachably mounted on the cover frame.

7. The display apparatus according to claim 6, wherein the first speaker is coupled with the cover frame by at least one screw.

8. The display apparatus according to claim 6, wherein the first speaker and the cover frame are coupled with each other by engagement of hooks.

9. The display apparatus according to anyone of claims 1 to 8, wherein the plurality of speakers further comprise a woofer configured to output a low frequency range of sounds, and at least one tweeter configured to output a high frequency range of sounds, and the first speaker is a center speaker configured to output a mid to high audio frequency range of sounds.

10. The display apparatus according to claim 9, wherein the woofer is installed in a rear side of the cover frame.

11. The display apparatus according to claim 9 or 10, wherein the at least one tweeter is installed on at least one of left and right edges among the four edges of the cover frame.
